# FASCICULE DE BREVET EUROPEEN

(11) **EP 2 003 347 B1**
(45) Date de publication et mention de la délivrance du brevet: **16.02.2011**
(21) Numéro de dépôt: 07380288.6
(22) Date de dépôt: 23.10.2007
(51) Int. Cl.: F16B 12/42, F16B 12/32, F16B 12/30, F16B 12/20, F16B 12/24

(54) **Dispositif d'assemblage permettant d'unir un tube à une structure**
Montagevorrichtung, die das Verbinden eines Rohrs mit einer Struktur ermöglicht
Assembly device for attaching a pipe to a structure

(30) Priorité: 12.06.2007 ES 200701619
(43) Date de publication de la demande: 17.12.2008
(73) Titulaire: Eredu, S. Coop., 20250 Legorreta (Gipuzkoa) (ES)
(72) Inventeur: Olano Jauregui, Juan Carlos, 20250 Legorreta (Gipuzkoa) (ES)
(74) Mandataire: Urizar Barandiaran, Miguel Angel

(56) Documents cités:
- EP-A- 0 564 889
- DE-A1- 4 326 451
- ES-U- 1 042 458
- GB-A- 1 515 297

## Description

Il existe d'innombrables systèmes comprenant un tube, une structure et un dispositif d'assemblage du tube à la structure.

L'invention proposée ici constitue pour sa part un système ne comptant que peu d'éléments, -faits de matériaux peu chers et permettant un assemblage et un maniement aisés- dont l'absolue et entière réversibilité rend superflue l'intervention d'un quelconque spécialiste à l'heure du montage comme du démontage.

C'est pourquoi il s'agit-là d'un système satisfaisant le niveau de prestations exigible, sans être pour autant ni compliqué ni onéreux.

De plus, du fait de la capacité de déformation de ces éléments, il permet d'obtenir une évidente amélioration de l'ajustement/assemblage recherché.

Le Brevet DE 4326451 décrit un dispositif d'assemblage d'un tube à une structure qui comprend une cheville femelle réalisée dans un matériau expansif dont la surface externe est, au moins partiellement, en contact avec la surface interne du tube, cette cheville femelle dispose d'un orifice dans lequel vient s'insérer une cheville mâle déplaçable dont la surface externe entre en contact, au moins partiellement, avec la surface interne de l'orifice, agissant comme cale, et parce que ce dispositif d'assemblage dispose d'un système de vissage par serrage permettant d'assembler ensuite la cheville mâle à la structure à travers de la cheville femelle et d'obtenir ainsi l'assemblage du tube à la structure.

Le système de l'invention se caractérise par le fait que la cheville femelle est pourvue d'au moins un doigt supérieur déformable dont le rôle est de venir s'aplatir contre le tourillon si l'on continue de serrer la vis améliorant le serrage; et par le fait que la surface externe du tourillon entre en contact avec la surface interne du tube qui l'enserre au niveau de la jonction des deux pièces et sur laquelle viennent s'insérer les éléments de vissage.

Pour mieux comprendre en quoi consiste la présente invention, les plans suivants représentent une forme préférentielle de réalisation pratique, susceptible de subir des modifications accessoires à condition toutefois que ces dernières n'en dénaturent pas le fondement.
La figure 1 représente une vue en coupe et éclatée des différents éléments intervenant dans la réalisation pratique de l'invention.
La figure 2 reprend pour sa part une vue en coupe des différents éléments de la figure 1 mais cette fois, assemblés.

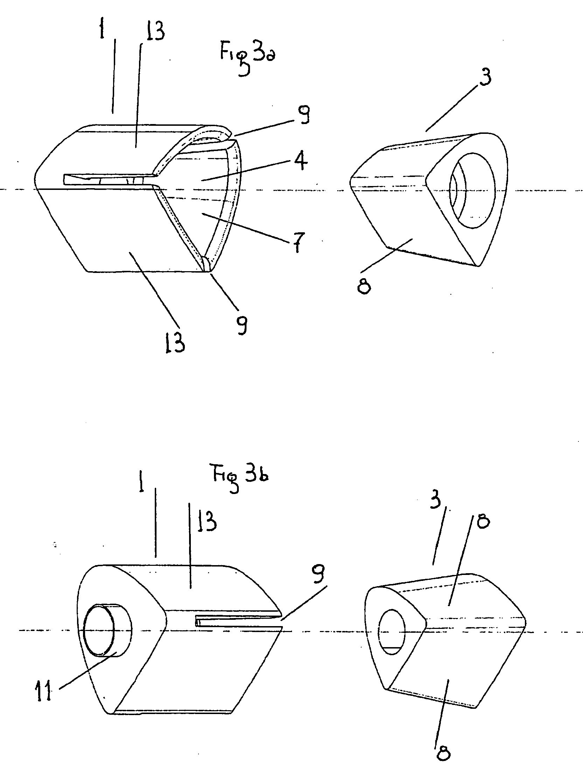

Les figures 3a et 3b constituent pour leur part des vues en perspective et éclatées de la cheville mâle (3) et de la cheville femelle, déjà représentées en figure 1.

Un exemple de réalisation pratique et non limitatif de la présente invention est décrit ci-après.

En ce qui concerne la réalisation illustrée par la figue 1, l'on a représenté, à titre d'exemple de structure (6), un noeud d'assemblage dossier - appuis-coude d'une chaise et à titre d'exemple de tube (2), le pied de cette même chaise, mais le dispositif mis en oeuvre dans cette invention est évidemment applicable à n'importe quel autre type de structure/tube.

La présente invention met en oeuvre une cheville femelle (1) dont le matériau est de préférence déformable, tel le plastique ou un quelconque polymère, et dont au moins une partie de la surface externe (13) vient se fixer par expansion de serrage/déformation, contre la paroi interne du tube (2).

La cheville femelle (1) dispose, pour réaliser ladite expansion, d'encoches latérales (9) rejoignant son orifice central (4).

Cette invention met également en oeuvre une cheville mâle (3) déplaçable venant s'insérer suivant un axe longitudinal, à l'intérieur de l'orifice (4) de la cheville femelle (1).

La paroi/surface externe (8) de la cheville mâle (3) entre alors en contact avec la paroi/surface interne (7) de la cheville femelle (1) de sorte que, à mesure que celle-ci se déplace à l'intérieur de celle-là, les parois de la cheville mâle (3) font pression sur la surface interne (7) de la cheville femelle (1) jusqu'à déborder de cette dernière grâce aux encoches (9) qui le lui permettent, pour venir finalement s'aplatir contre la paroi interne du tube (2).

L'assemblage tube (2) cheville femelle (1)-cheville mâle (3) se réalise sur l'exemple présenté au moyen d'un orifice (4) de cheville femelle (1) et d'une surface de cheville mâle (3) de structure tronc-conique ou tronc-pyramidale, mais cette structure pourrait aussi bien être d'une toute autre nature tant que la pression latérale exercée lors du déplacement de la cheville mâle (3) à l'intérieur de l'orifice (4) de la cheville femelle (1) est maintenue.

L'on dispose également d'une vis (5) qui, traversant à la fois la cheville mâle (3) et la cheville femelle (1) vient s'unir à la structure (6), la tête (5₁) de vis (5) faisant pression contre la base de la cheville mâle (3) contre laquelle elle repose.

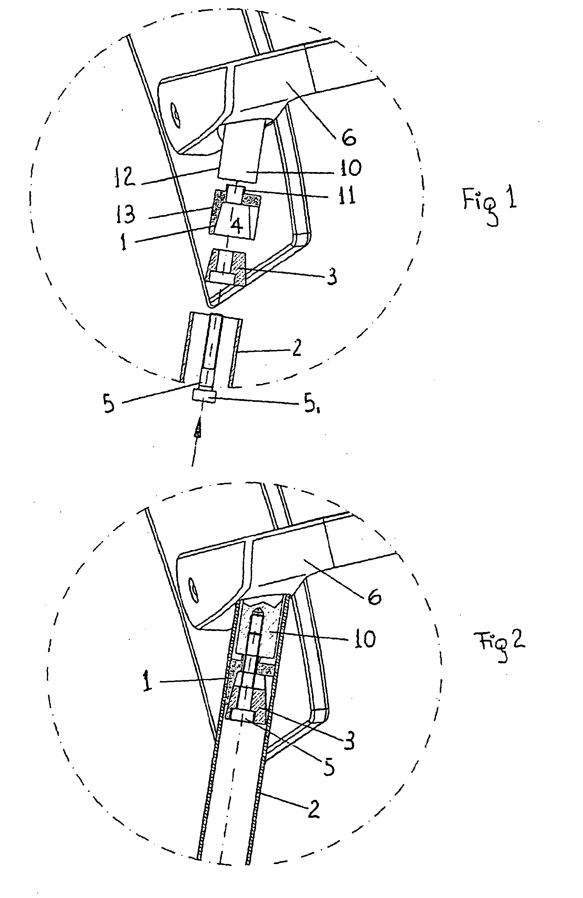

Comme spécifié sur les figures 1 et 2, la structure dispose d'un tourillon (10) dont la surface externe (12) est en contact avec la surface interne du tube (2) qui vient l'enserrer, une fois l'assemblage effectué.

Afin d'ajuster au mieux l'assemblage de ces pièces, la tête de la cheville femelle (1) est pourvue d'un doigt (11) déformable permettant un meilleur emboîtement/serrage de la cheville femelle (1) à l'intérieur du tube (2). Ainsi, même après que la tête de la cheville femelle (1) a fait butoir contre la structure (6) et dans ce cas précis, contre le tourillon (10), si l'on continue de serrer la vis (5), l'on augmente la traction exercée contre le tourillon (10) et donc la pression exercée sur ledit tourillon (10) et la cheville femelle (1), cette cheville femelle (1) pouvant alors continuer de s'enfoncer/de s'étendre de manière à améliorer en conséquence l'assemblage/le serrage de l'ensemble. Le tout grâce à la déformation par aplatissement du doigt (11).

## Revendications

1. Système comprenant un tube, une structure pourvue d'un tourillon (10) et un dispositif d'assemblage du tube à la structure, dispositif comprenant une cheville femelle (1) réalisée dans un matériau expansif dont la surface externe est, au moins partiellement, en contact avec la surface interne du tube (2), cette cheville femelle (1) dispose d'un orifice (4) dans lequel vient s'insérer une cheville mâle (3) déplaçable dont la surface externe (8) entre en contact, au moins partiellement, avec la surface interne (7) de l'orifice (4), agissant comme cale, le dispositif d'assemblage dispose d'un système de vissage (5) par serrage permettant d'assembler la cheville mâle (3) à la structure (6) au travers de la cheville femelle (1) et d'obtenir ainsi l'assemblage du tube (2) à la structure (6), la surface (7) de l'orifice (4) étant de nature tronc-pyramide ou tronc-conique qui se prolongue à l'extérieur par des encoches (9), **caractérisé par le fait que** la cheville femelle (1) est pourvue d'au moins un doigt (11) supérieur déformable dont le rôle est de venir s'aplatir contre le tourillon (10) si l'on continue de serrer la vis (5) améliorant le serrage; et **par le fait que** la surface externe du tourillon (10) entre en contact avec la surface interne du tube (2) qui l'enserre au niveau de la jonction des deux pièces et sur laquelle viennent s'insérer les éléments de vissage (5).

## Claims

1. A system comprising a tube, a structure equipped with a journal (10), and a device for coupling a tube to the structure, the device consisting of an expandable female plug (1) the outer surface of which is at least partially in contact with the inner surface of the tube (2), the female plug (1) having an orifice (4) with a moveable male plug (3) inside it, the outer surface (8) of which is at least partially aligned with the surface (7) of the orifice (4) in wedge form, the coupling device having a screw tightening system (5) to join the male plug (3) to the structure (6) through the female plug (1) with which the tube (2) is joined to the structure (6), the surface (7) of the orifice (4) being of troncopyramidal or troncoconical type, which is extended on the outer part by grooves (9), **characterized in that** the female plug (1) consists of at least one deformable upper spline (11), the function of which is to squeeze against the journal (10) if the tightening of the screw (5) continues, improving the tightness; and **in that** the outer surface of the journal (10) comes into contact with the inner surface of the tube (2) that holds it at the level of the union of the two parts, and on which the screwing elements (5) are screwed.

## Patentansprüche

1. System bestehend aus einem Rohr, einer Struktur, die mit einem Zapfen (10) und einer Vorrichtung für die Anbindung des genannten Rohres an die Struktur versehen ist, wobei diese Vorrichtung ihrerseits aus einem aufweitbaren weiblichen Element (1) besteht, deren äußere Oberfläche zumindest teilweise in die innere Fläche des Rohrs (2) eingreift, wobei dieses weibliche Element (1) über eine Aufnahme (4) verfügt, in welche ein nicht ortsgebundenes männliches Element (3) eingreift, dessen äußere Oberfläche (8) zumindest teilweise und dabei konisch mit der Fläche (7) der Aufnahme (4) konjugiert, wobei die genannte Vorrichtung für die Anbindung über ein auf Druck verschraubbares Schraubsystem (5) verfügt, mit welchem das männliche Element (3) über das weibliche Element (1) mit der Struktur (6) verbunden wird und auf diese Weise das Rohr (2) an die Struktur (6) angebunden wird. Die genannte Oberfläche (7) der Aufnahme (4) ist dabei als Pyramidenstumpf oder konisch pyramidal ausgeführt und wird in ihrem äußeren Bereich durch Schlitze (9) verlängert, und das weibliche Element (1) ist mit mindestens einem deformierbaren oberen Paßstift (11) versehen, dessen Aufgabe darin besteht, beim Weiterdrehen des Schraubsystems (5) an dem Zapfen (10) zerdrückt zu werden und auf diese Weise den Schraubanzug zu verbessern; darüber hinaus erfolgt diese Verbesserung aufgrund des Umstandes, daß die äußere Oberfläche des Zapfens (10) in Verbindung mit der Innenfläche des Rohrs (2) tritt, welches die Fläche im Bereich der Verbindung der beiden Elemente umschließt, und auf diese Verbindung die Wirkung der Verschraubung des Schraubsystems (5) zum Tragen kommt.
